# EUROPEAN PATENT APPLICATION

(11) **EP 1 845 446 A2**
(43) Date of publication of application: **17.10.2007**
(21) Application number: 07110014.3
(22) Date of filing: 02.02.2004
(51) Int. Cl.: G06F 9/54, H04L 29/08

(54) **System and method for publishing and accessing application APIS on a generic terminal**

(62) Divisional of application: 04250554.5
(71) Applicant: Research In Motion Limited, Waterloo, Ontario N2L 3W8 (CA)
(72) Inventor: Shenfield, Michael, Richmond Hill Ontario L4C 3S9 (CA); Bibr, Viera, Killbride Ontario L0P 1G0 (CA); Goring, Brian R, Ontario L9T 5V4 (CA)
(74) Representative: Korenberg, Alexander Tal

(57) **Abstract**

Disadvantages with the current application interaction approach include: changes in configuration or version of a single software component often require the reinstall of a large number of dependent or related applications and previously installed software components are unable to communicate with software provisioned and installed at a later date. There is provided systems and methods for providing dynamic interaction between a pair of application programs by a platform neutral interface of a terminal, the pair of applications including a requestor application (400) desiring access to a target application (107). One such method includes registering access information of the target application, such that the access information includes published access information made available in a data structure for retrieval by the platform neutral interface. This method further includes receiving an access request (404) by the platform neutral interface from the requestor application, such that the access request includes request content corresponding to the published access information of the target application (107). The method proceeds further by obtaining an interface component (122) by using the request content to search the data structure, such that the interface component (122) is configured for enabling communication between the platform neutral interface (406) and the target application in an access format expected by the target application (403). The method also includes employing the interface component by the platform neutral interface to satisfy the access request of the requestor application for interaction with the target application.

## Description

### Background

The present application relates to the interaction of applications using application program interfaces.

There is a continually increasing number of terminals in use today, such as mobile telephones, PDAs with wireless communication capabilities, personal computers, self service kiosks and two-way pagers. Software applications which run on these devices increase their utility. For example, a mobile phone may include an application which retrieves the weather for a range of cities, or a PDA may include an application that allows a user to shop for groceries. These software applications take advantage of connectivity to a network in order to provide timely and useful services to users. However, due to the restricted resources of some devices, developing software applications for a variety of devices remains a difficult and time-consuming task.

At present there is no public standard for defining and publishing application access APIs. Currently, wireless platforms and implementations offer some customized interaction solutions that assume explicit knowledge of all available applications and corresponding APIs installed on the device. The capability of device-hosted wireless applications to interact is predefined by current runtime environments and current applications' built-in knowledge of this environment. All decisions regarding the interaction options and available external APIs are made during the design and development phase with no runtime adjustment or extension possible. The interactions between applications are currently implemented using the coding platform native for the supporting runtime environment and interacting applications.

Disadvantages with the current application interaction approach include: changes in configuration or version of a single software component often require the reinstall of a large number of dependent or related applications; previously installed software components are unable to communicate with software provisioned and installed at a later date; and inability to seamlessly upgrade existing software or change components in an interdependent software suite.

ISystems and methods are disclosed for customized interaction of applications to obviate or mitigate at least some of the above-presented disadvantages.

### Summary

Disadvantages with the current application interaction approach include: changes in configuration or version of a single software component often require the reinstall of a large number of dependent or related applications; previously installed software components are unable to communicate with software provisioned and installed at a later date; and inability to seamlessly upgrade existing software or change components in an interdependent software suite. Contrary to the current interaction approach there are provided systems and methods for providing dynamic interaction between a pair of application programs by a platform neutral interface of a terminal, the pair of applications including a requestor application desiring access to a target application. One such method can include registering and/or distributing automatically or upon request access information of the target application, such that the access information includes published access information made available in a data structure for retrieval by the platform neutral interface. The term registering as used herein can refer to specific communication with and/or to a directory or repository and/or distribution automatically or upon request. Under such a method, an access request is received by a platform neutral interface of a terminal from the requestor application, such that the access request includes request content corresponding to the published access information of the target application. An interface component is obtained by using the request content to search the data structure, such that the interface component is configured for enabling communication between the platform neutral interface and the target application in an access format expected by the target application. The obtained interface component is employed by the platform neutral interface to satisfy the access request of the requestor application for interaction with the target application.

A method is also disclosed for providing dynamic interaction between a pair of application programs by a platform neutral interface of a terminal, the pair of applications including a requestor application desiring access to a target application, the method comprising the steps of: registering and/or distributing access information of the target application, the access information including published access information made available in a data structure for retrieval by the platform neutral interface; receiving an access request by the platform neutral interface from the requestor application, the access request including request content corresponding to the published access information of the target application; obtaining an interface component by using the request content to search the data structure, the interface component configured for enabling communication between the platform neutral interface and the target application in an access format expected by the target application; and employing the interface component by the platform neutral interface to satisfy the access request of the requestor application for interaction with the target application.

Also provided is a terminal for providing dynamic interaction between a pair of application programs in a platform neutral environment provided by a runtime environment of the terminal, the pair of applications including a requestor application desiring access to a target application, the terminal comprising: a data structure for registering access information of the target application, the access information including published access information; an interface module for providing the platform neutral environment, the interface module configured for receiving an access request from the requestor application, the access request configured to include request content corresponding to the published access information of the target application, the published access information of the data structure retrievable by the interface module; and an interface component coupled to the interface module retrievable by using the request content to search the data structure, the interface component configured for enabling communication between the interface module and the target application in an access format expected by the target application; wherein employing the interface component by the interface module satisfies the access request of the requestor application in interaction with the target application.

A computer program product is further disclosed for providing dynamic interaction between a pair of application programs in a platform neutral environment provided by a runtime environment of a terminal, the pair of applications including a requestor application desiring access to a target application, the computer program product comprising: a computer readable medium; a data structure module stored on the computer readable medium for registering access information of the target application, the access information including published access information; an interface module coupled to the data structure module for providing the platform neutral environment, the interface module configured for receiving an access request from the requestor application, the access request configured to include request content corresponding to the published access information of the target application, the published access information of the data structure module retrievable by the interface module; and an interface component module coupled to the interface module, the interface module configured for containing an interface element retrievable by using the request content to search the data structure module, the interface component configured for enabling communication between the interface module and the target application in an access format expected by the target application; wherein employing the interface component by the interface module satisfies the access request of the requestor application in interaction with the target application.

### Brief Description Of The Drawings

These and other features will become more apparent in the following detailed description in which reference is made to the appended example drawings, wherein:
Figure 1 is a block diagram of a network system;
Figure 2 is a block diagram of a generic terminal of Figure 1;
Figure 3 shows a processing framework of the terminal of Figure 2;
Figure 4 shows application interaction using a dedicated handler for the framework of Figure 3;
Figure 5 is an alternative example of the interface module of Figure 3 as an
Integration Engine;
Figure 6 is an example of runtime flow of the integration engine of Figure 3; and
Figure 7 shows an example operation of interaction between two applications of Figure 1.

### Detailed Description

### Network System

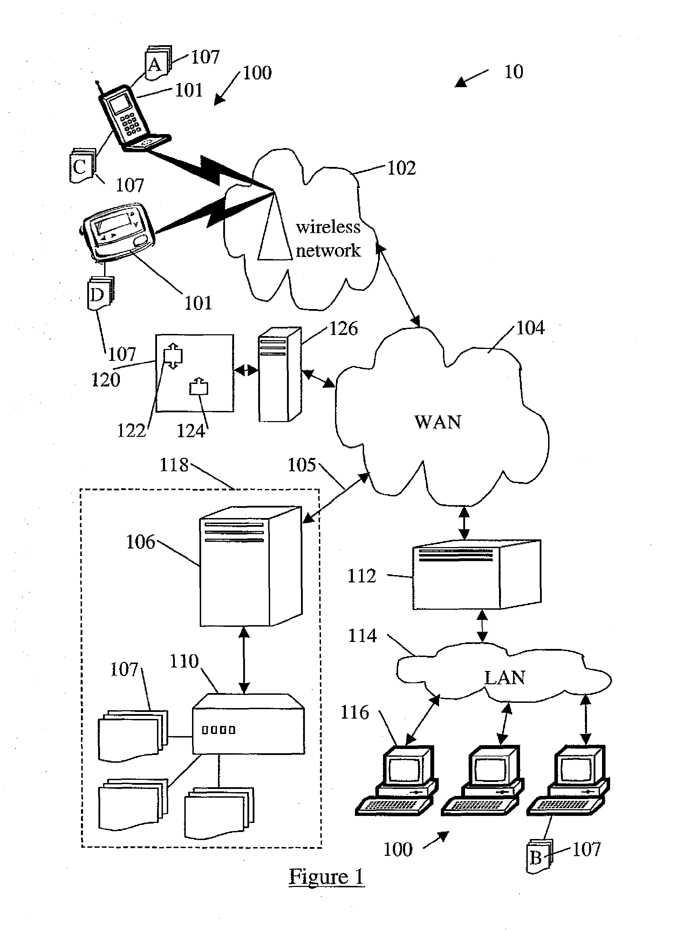

Referring to Figure 1, a network system 10 comprises a plurality of terminals 100 for interacting with one or more application servers 110 accessed by a management server 106, via a coupled Wide Area Network (WAN) 104 such as but not limited to the Internet, The terminals 100 receive application programs 107 from the application server 110 via the server 106 over the network 104. The generic terminals 100 can be such as but not limited to wired devices such as desktop terminals 116, wireless devices 101, PDAs, self-service kiosks and the like. Further, the system 10 can also have a gateway server 112 for connecting the desktop terminals 116 (or other wired devices) via a Local Area Network (LAN) 114 to the server 106.

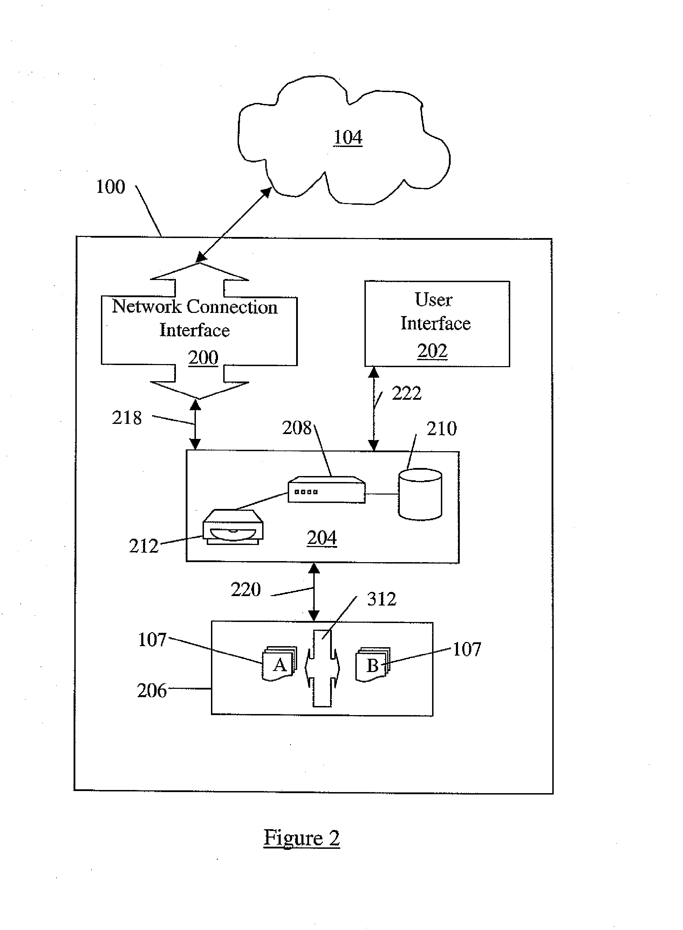

Further, the system 10 can have a wireless network 102 for connecting the wireless devices 101 to the WAN 104. It is recognized that other terminals and computers (not shown) could be connected to the server 106 via the WAN 104 and associated networks other than as shown in Figure 1. The generic terminals 100, wireless devices 101 and personal computers 116 are hereafter referred to as the terminal 100 for the sake of simplicity. Further, the networks 102, 104, 112 of the system 10 will hereafter be referred to as the network 104, for the sake of simplicity. It is recognized that there could be multiple servers 106, 110, and/or that the functionality of the servers 106 and 110 could be combined, if desired. It is further recognized that the servers 106, 110 could be implemented by a service provider 118 providing a schema-defined service, such as a web service by example. Further, the terminals 100 could also operate as stand-alone devices when obtaining and executing the applications 107. For example, the application can be loaded onto terminals via a computer readable medium 212, (see Figure 2), as further defined below.

The system 10 facilitates interaction between a number of applications 107, labeled for example as "A", "B", "C", and "D", distributed on one of the terminals 100 (i.e. local interaction- for example between application "A" and "C") and between terminals 100 (i.e. remote interaction- for example between applications "B" and "D"). The applications 107 interact through an interface and data structures module 312 (see Figure 2) expressed in a platform neutral structured definition language (such as but not limited to XML) and/or in a platform neutral scripting language (such as but not limited to ECMAScript). The applications 107 communicate through Application Program Interfaces (APIs) 122 and access extensions 124 (hereafter referred to as access handlers 124). The APIs 122 and handlers 124 can be retrieved from a repository or database 120. It is recognized that the database 120 could be made available by the service 118 or an independent database server 126. The system also provides for execution of API declared operations and matching an API with an application request. The language used to express the interface module 312 is hereafter referred to as XML for simplicity without loss of generality; it is specifically contemplated that in each such instance a different platform neutral structured definition language or scripting language could be used depending upon implementation choices and/or constraints.

### Generic Terminal

Referring to Figure 2, the terminals 100 are such as but not limited to mobile telephones (or other wireless devices), PDAs, two-way pagers or dual-mode communication terminals. The terminals 100 include a network connection interface 200, such as a wireless transceiver or a wired network interface card or a modem, coupled via connection 218 to a terminal infrastructure 204. The connection interface 200 is connectable during operation of the terminals 100 to the network 104, such as to the wireless network 102 by, for example, RF links (see Figure 1), which enables the terminals 100 to communicate with each other and with external systems (such as the server 106 - see Figure 1) via the network 104 and to coordinate the requests/response messages 105 between the terminals 100 and the servers 106, 110, 126. The network 104 supports the transmission of the application programs 107 in the requests/response messages 105 between terminals 100 and external systems, which are connected to the network 104. The network 104 may also support voice communication for telephone calls between the terminals 100 and terminals which are external to the network 104. A wireless data transmission protocol can be used by the wireless network 102, such as but not limited to DataTAC, GPRS or CDMA. It is recognized that interactions between terminals 100 can also refer to remote interactions between the applications 107.

Referring again to Figure 2, the terminals 100 also have a user interface 202, coupled to the terminal infrastructure 204 by connection 222, to facilitate interaction with a user (not shown). The user interface 202 can includes one or more user input devices such as but not limited to a QWERTY keyboard, a keypad, a trackwheel, a stylus, a mouse, a microphone and the user output device such as an LCD screen display and/or a speaker. If the screen is touch sensitive, then the display can also be used as the user input device as controlled by the terminal infrastructure. 204.

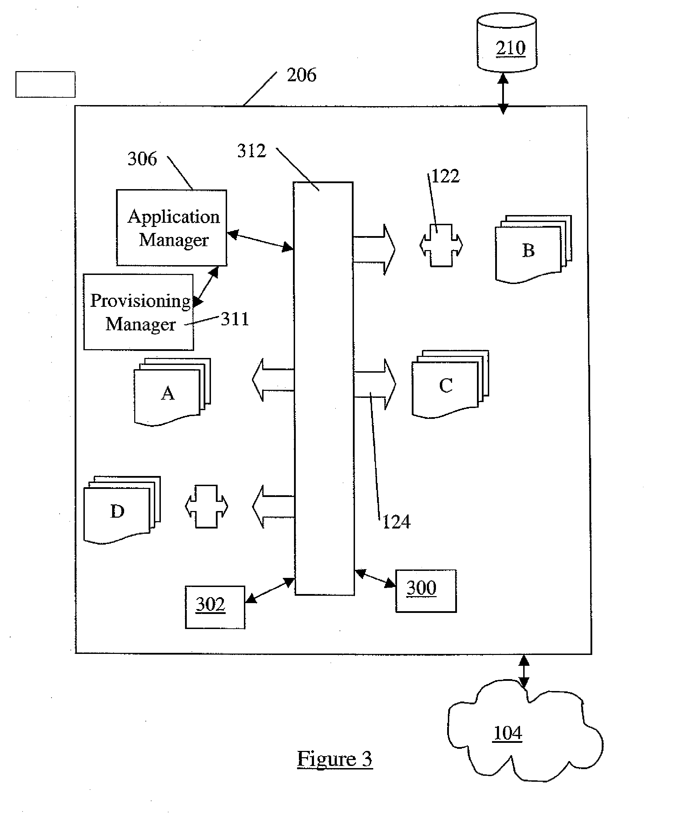

Referring again to Figure 2, operation of the terminal 100 is enabled by the terminal infrastructure 204. The terminal infrastructure 204 includes the computer processor 208 and the associated memory module 210. The computer processor 208 manipulates the operation of the network interface 200, the user interface 202 and a framework 206 (see Figure 3) of the communication terminal 100 by executing related instructions, which are provided by an operating system and client application programs 107 located in the memory module 210; the computer processor 208 can include one or more processing elements that may include one or more general purpose processors and/or special purpose processors (e.g., ASICs, FPGAs, DSPs, etc). Further, it is recognized that the terminal infrastructure 204 can include a computer readable storage medium 212 coupled to the processor 208 for providing instructions to the processor for loading and executing client application programs 107. The computer readable medium 212 can include hardware and/or software such as, by way of example only, magnetic disks, magnetic tape, optically readable medium such as CD/DVD ROMS, and memory cards. In each case, the computer readable medium 212 may take the form of a small disk, floppy diskette, cassette, hard disk drive, solid state memory card, or RAM provided in the memory module 210. It should be noted that the above listed example computer readable mediums 212 can be used either alone or in combination.

### Processing Framework

Referring to Figure 2, a client runtime environment is provided by the processing framework 206. Multiple such runtime environments could potentially be available for use by the processing framework 206 of a given terminal 100. The framework 206 of the terminal 100 is coupled to the infrastructure 204 by the connection 220 and is an interface to the terminal 100 functionality of the processor 208 and associated operating system of the infrastructure 204. The client runtime environment of the terminals 100 is preferably capable of generating, hosting and executing the client application programs 107 on the terminal 100; if multiple runtime environments are available, a particular one can be selected for use with a given application program 107. Referring again to Figure 1, the client runtime environment provided by the terminal 100 can be configured to make the terminals 100 operate as web clients of the web services (of the web service 118). It is recognized that the client runtime environment can also make the terminals 100 clients of any other generic schema-defined services supplied by the service 118.

The terminal runtime environment of the framework 206 preferably supports the following basic functions for the resident executable versions of the client application programs 107 (see Figure 2), such as but not limited to:
provide the platform neutral interface module 312 for facilitating local and/or remote interaction between applications 107;
provide a communications capability to send messages 105 to the server 106 via the network 104;
provide data input capabilities by the user on an input device of the terminals 100 to supply data parts for outgoing messages 105 to the server 106;
provide data presentation or output capabilities for response messages 105 (incoming messages) or uncorrelated notifications of the server 106;
provide data storage services to maintain local client data in the memory module 210 and/or computer readable medium 212 (see Figure 2) of the terminal 100; and
provide an execution environment for a scripting language for coordinating operation of the application 107.

Further, specific functions of the client runtime environment can include such as but not limited to service support for language, coordinating memory allocation, networking, management of data during I/O operations, coordinating graphics on an output device of the terminals 100 and providing access to core object oriented classes and supporting files/libraries. Examples of the runtime environments implemented by the terminals 100 can include such as but not limited to Common Language Runtime (CLR) by Microsoft and Java Runtime Environment (JRE) by Sun Microsystems.

Referring to Figure 3, the processing framework 206 can also have other modules such as but not limited to an Application Manager 306 and a provisioning manager 311. The provisioning manager 311 manages the provisioning of the software applications 107 on the terminal 100. Application provisioning can include storing, retrieving, downloading and removing applications 107, and configuring the application programs 107 for access to remote applications 107 via the cooperating interface modules 312 on linked terminals 100. The Application Manager 306 can be used to interact with the user interface 202 (see Figure 2), manage application lifetime etc. It is recognized that other configurations of the processing framework 206 with respective managers 306, 311 in addition to or other than shown can be implemented, as desired.

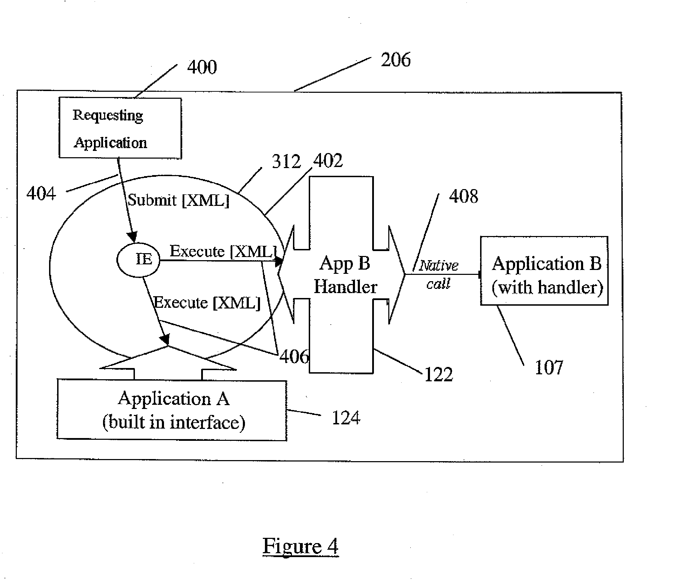

Referring again to Figure 3, the interface module 312 employs a series of interface components, such as APIs 124, to coordinate communication between a requesting application 400 (see Figure 4) and the target applications 107. The interface module 312 can also use other interface components, such as the access handlers 122, to run as a plugin inside the interaction module 312 and to mediate interactions between the interaction requestor 400 and the target application 107, wherein the target application is expressed in a language other than the platform neutral language of the module 312 (e.g. convert XML-based standard interface calls from the module 312 into application specific native calls appropriate for communication with the native based target application program 107). It is recognized that the target application can be expressed in the native language of the runtime environment or otherwise expressed in a language different from the structured platform neutral language of the interface module 312.

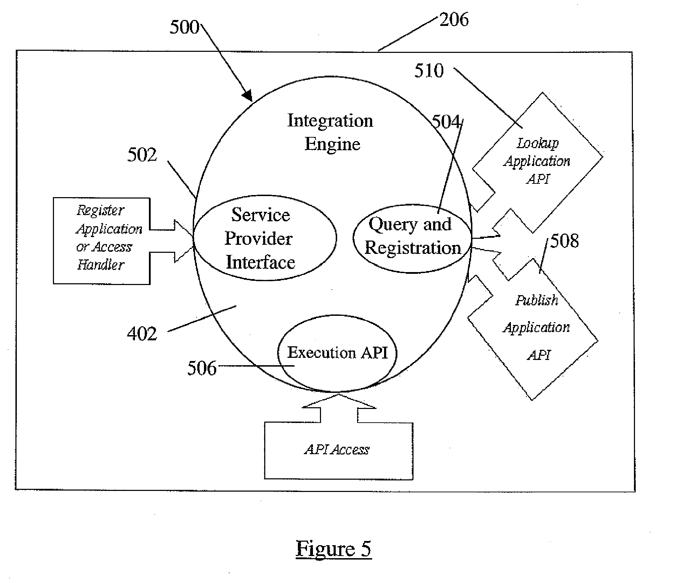

The Access Handlers 122 can be developed to run as a plugin inside the interface module 312 and may mediate the interactions between the application 107 acting as an interaction requestor and the target application 107. The Handler 122 provides API support in terms of internal constructs of the target application 107 and is target application specific in its configuration. The Handler 122 allows the interface module 312 to access a published API 124 for an associated application 107 that is not expressed in the platform neutral language of the interface module 312. The interface module 312 provides the facility to associate new Handlers 122 to the Application URI or other appropriate identifier of a table 302 (see Figure 3) via a registration interface 504 (see Figure 5). The Handler 122 can verify validity of passed data and could also optionally contain some access level security related filtering and verification.

Referring again to Figure 3, the interface module 312 employs an Application Profile table 300 and the Application API Descriptor table 302 for containing access information of the application 107, the APIs 124, and the handlers 122. The Application Profile table 300 contains application 107 information provided when a new application 107 is provisioned/installed or otherwise installed on the terminal 100. The profiles contain all information required for application publishing (such as but not limited to application URI, description, version, etc.). The knowledge (publication) of Application Profiles in the table 300 and/or Application API Descriptors in the table 302 facilitates allows external access to a given application 107 by other applications through the interaction module 312. The Application API Descriptor table 302 can include a formal descriptor of all APIs supported by a given application 107. The descriptors could be expressed in any format understandable by the execution runtime such as XML or any other structured language. These descriptors facilitate a dynamic API discovery mechanism further described below. It is recognized that the tables 300, 302 could be combined as one table or other data structure.

### Application Profile

The Application Profiles of the table 300 could be expressed in any format understandable by the execution runtime such as XML or any other structured language. The profiles contain an application identification that can be in the form of a URI and additional information required for application publishing (such as but not limited to version, description, etc.). Accordingly, after the application 107 is registered with the interface module 312, the application 107 can be addressed by other applications using the associated published application identifier of the table 320, It is recognized that the application 107 publishing information should support addressing of local applications 107 (running on the same terminal 100) as well as addressing of remote applications 107 running at other terminals 100. Remote access uses the server 106,116 capable of managing the remote access. For example, the application profiles corresponding to each application 107 can be defined and provided by the Application Developer and/or Service Provider when the application 107 is transmitted to the terminal 100, either explicitly or embedded in the content of the application 107.

The following DTD fragment shows a sample Application Profile declared using XML;

### Example: XML-based Application Profile description using DTD

```
 <!ELEMENT application (publish, ...)>
 <lELEMENT publish (#PCDATA)>
 <!ATTLIST publish
   uri CDATA #REQUIRED
  version CDATA #IMPLlED
  desc CDATA #IMPLIED>
```

Using the XML definition above the Application Profile fragment for an Address Book application could be published as: *<publish uri="AddressBook" version= "3.1" desc="Contacts manager for device user"*/*>,* Applications 107 trying to access a local Address Book application 107 on the terminal 100 could use the "local" URI: *"*//*local*/*AddressBook",* whereas applications 107 trying to access the AddressBook application 107 on another terminal 100 (e.g. to insert the terminal user as a new contact for a remote user), could use "remote" addressing: //*remote*/*123987*/*AddressBook,* where 123987 is a unique ID of the remote terminal 100.

### Application API Descriptor

An application access API of the table 302 could be expressed in any format understandable by the execution runtime such as XML or any other structured language. The Application API Descriptors can be defined using a standardized subset of expression-terms. The requesting application 107 would possess knowledge on how to match its internal constructs with the standardized expression terms of the API descriptors. This shared knowledge helps the use of the Application API Descriptor information and facilitates interactions with the application 107 publishing this API. For example, if the requestor application 107 uses internal construct 'rendezvous' it could be matched with a standardized term like 'meeting' or 'appointment' if it appears in the published API descriptor of the target application 107.

The application API could publish descriptors for the following API categories:
■ Information APIs 124
   o Message (i.e. sending message to the target application 107)
   o Data (i.e. accessing data managed by the target application 107)
■ Calling API 124 supporting the following calling models
   - Start called application 107 and terminate caller
   - Start called application 107 and keep caller running
   - Start called application 107 and suspend caller until termination of the called

The following DTD fragment shows an XML based sample for an API Descriptor:

### Example: Sample XML based API Descriptor definition using DTD

```
 <!ELEMENT action (op)>
 <!- type can be to call a function, send a message or retrieve information data ->
 <!ATTLIST action
   api CDATA #REQUIRED
   type (call |send| execute) "execute"
 >
 <|ELEMENT op (param?,result?)>
 <!ATTLIST op
   name CDATA #REQUIRED
 >
 <!ELEMENT param (#PCDATA)>
 <! ELEMENT result EMPTY>
 <!ATFLIST result
   type CDATA #REQUIRED
 >
```

### Application API Interaction Interfaces

The system 10 provides interaction between applications 107 according to such as but not limited to two modes, namely:
■ Mode 1 is implemented to comply with the standard interaction interface module 312.
   This mode of applications 107 has been designed with knowledge of the interaction standard supported by the interface module 312 and implements the interface module 312 to convert the requesting application 400 (see Figure 4) calls to internal operations of the platform neutral environment of the interface module 312; and
■ Mode 2 is implemented without knowledge of the standard interaction interface module 312. This mode of applications 107 covers a wide range of applications 107 (e,g. current existing applications) that do not comply with the standard interaction interface module 312. In order to enable interoperability for these applications 107 the interaction interface module 312 offers a plug-in service provider interface (SPI) 502 (see Figure 5) for the access handlers 122. The Access Handlers 122 could be developed for a specific application 107 or API 124 and may support protocol conversion (such as but not limited to converting XML-based standard interface calls into application specific native calls).

Referring to Figure 4, Application A belongs to mode 1. Application B belongs to Mode 2. The dedicated Handler 122 was developed to support the API publishing and access to application B. The requesting application 400 submits an XML based request 404 to the interface module 312, which calls the Application A by an XML call 406 through the corresponding API-A 124 completely in the platform neutral environment 402 (e.g. XML), as supplied by the interaction module 312 of the processing framework 206. Alternatively, Application B is not expressed for interaction in XML, rather a different language used, for example that of the native runtime environment. Accordingly, the appropriate handler 122 for the application B is used by the interaction module 312 to convert the XML based request 404 into a native call 408.

The requesting application 400 utilizes the interaction module 312 to access the target Application A,B using the defined identifier published by the table 300 and/or Access API Descriptor published by the table 302 (see Figure 3). The interaction module 312 passes on this request 404 to the target Application(s) (either directly 406 or via the Handler 408). Upon completion or otherwise execution of the request 406, 408, the interaction module 312 passes the results (if appropriate) back to the requesting application in language of the platform neutral environment 402. It is recognized that if the requesting application 400 was expressed in a language other than that of the platform neutral environment 402, then the handler 122 would convert the response 406 back into the language of expression of the, for example native based, application B.

Referring to Figure 4, to publish and register its API 124, the Application A,B or its Handler 122 can register with the interaction module 312 during provisioning. The registration of the application API 124 can include the following: API Publishing; and API instance registration. It is recognized that the registration logic could optionally include associated keywords for the dynamic lookup of the Application 107 and/or associated API 124.

For example, the Application 107 can be developed with built-in knowledge of other applications 107 that coexist on the terminal 107 and be aware of the identifiers and API Descriptors, represented by the tables 300, 302 for all applications 107 it can target for access. In a general case the application 107 deployment model is flexible and newly provisioned applications 107 do not have knowledge of already deployed applications 107 on the terminal 100. In order to enable communications with other applications 107, the requesting application 400 could utilize a dynamic API lookup mechanism. For example, the application could be developed with the optional ability to export or import data in regard to external APIs 124, send messages, or call external applications 107 using dynamic discovery of the required API 124 by a search threshold, such as but not limited to a keyword scoring method.

When registered with the interaction module 312, the application 107 would lookup all required APIs 124 for other external applications 124 (for both remote and local applications 107) by submitting predefined sets of keywords characterizing these APIs 124. The interaction module 312 runs the lookup, matching submitted keywords with the keyword set of other applications 107 (or handlers 122), that were submitted upon publication of their access APIs 124 with the interaction module 312 and placed in the corresponding tables 300, 302. The interaction module 312 could utilize different matching algorithms to identify the best match for the requested API 124. An example algorithm is a keyword match counting that would return the API 124 with the highest score. More advanced algorithms such as scoring of weighted keywords or a combination match could also be applied. The following example shows API 124 lookup using the simple keyword scoring algorithm.

### Example: API lookup using keyword scoring algorithm, referring to Figure 3.

1. Application A is a Calendar application 107 that registers its API 124 in the table 302 specifying API keywords 'CALENDAR', 'APPOINTMENT' and `MEETING'.
2. Application B is a Holiday Viewer application 107 and registers its API 124 specifying API keywords 'CALENDAR' and `HOLIDAY'.
3. Based on the above, an Application C is a Service Call Planner application 107 executing a dynamic lookup using the API 124 lookup keywords 'CALENDAR' and 'APPOINTMENT'. Accordingly, the interaction module 312 returns the API Descriptor of application A from the table 302, as it scored more in keyword match. The Application C can validate the retrieved API Descriptor and, if satisfactory, could lookup the corresponding application 107 (or handler 122) identifier via the table 300 for the returned API instance. In this example, Application C would then access application A (e.g. best match) using the standard interaction protocol of the interaction module 312 as described above in reference to Figure 4.

### The Integration Engine

Referring to Figure 5, a further example of interface module 312 is an Integration Engine (IE) 500 as part of the terminal execution environment of the framework 206. The Integration Engine (IE) 500 can dynamically extend the published API and processes interactions between Applications 107 and the API Handlers 122 (see Figure 4). The IE 500 consists of the Service Provider Interface (SPI) component or extension interface 502, the API Query And Registration component 504, and Execution API logical components 506. The Integration Engine 500 can be referred to as a group of software/hardware components designed to: support interaction using standard interfaces (e.g. XML-to-native call translation) by enabling terminal 100 hosted applications 107 to access any published API 124 through the table 302; provide dynamic API 124 publishing, lookup, and discovery; offer the registration Service Provider extension Interface 502 for plug-in handlers 122 and applications 107 for provisioning of new API Handlers 122 or Applications 107; expose the interface component 504 for publishing and registration of Application Profiles and API Descriptors through the tables 300, 302.

Accordingly, in general, the Integration Engine 500 is a logical group of the device execution environment components dealing with interaction of device-hosted or remote applications 107. The Integration Engine 500 is designed to support the platform neutral interaction mode, interface publishing, and dynamic application 107 and/or application handler 122 plugin.

### Service Provider Interface 502

Referring to Figures 3 and 5, after publishing the API 124, the Application 107 or the associated Access Handler 122 register with the Integration Engine 500 as API instances. The API 124, handler 122, and application 107 publication information is registered with the appropriate tables 300, 302. The Service Provider extension Interface 502 supports dynamic plugin of Access Handlers 122 and Applications 107, i.e. the integration engine 500 requests the application manager 306 to search the tables 300, 302 for the appropriate requested application 107 and/or handler 122. If not found locally on the terminal 100, then the terminal 100 can canvas the repository 126 (see figure 1) for the required handler 122, API 124, and/or application 107. It is recognized that the extension interface 502 allows plugin of different types of Access Handlers 122, according to the specific language environments of the external applications 107.

### Query and Registration 504

The Query And Registration Interface 504 supports registration 508 of an Application Profile in the table 300 and publishing of Access Descriptor in the table 302. For the caller, it also supports lookup access 510 to this table information. The lookup interface 510 is considered to be optional functionality. Alternatively, the requesting application 400 may be aware of the target application location and Access API Descriptor and may not need to perform the lookup.

The application 107 or its Handler 122 could publish the API 124 in the table 302 using this example interface 508:
publishAPI [string : apiID, XML: apiDesc, string[] : keywords].
   The application 107 or its Handler 122 registers as an instance of this AP 124I. The URI parameter is that of the application 107 or of its associated Handler 122.
registerAPIInstance [string : URI, string : apiID].
The application 107 could dynamically lookup an external API 124 from the table 302 using:
lookupAPI [string[] : keywords] returns [XML : apiDescription]
lookupInstance [string : apiID] returns [string[] URIs]

### Execution API 506

The execution API interface 506 could be defined as the following calls including request content related to the access information contained in the tables 300, 302:
submit [XML : params]; or
submit [string : URI, XML : params].

With the first call shown above, the application URI is not specified. The integration engine 500 would issue a broadcast call to all applications 107 registered as instances for this API 124 to achieve access to the requested external application 107. In the second case, the requesting Application 400 (see Figure 4) specifies the target application 107 explicitly through the URI. Accordingly, the API execution interface 506 of the integration engine 500 coordinates the request and provision of selected APIs 124 according to the needs of the requesting application 400 (see Figure 4).

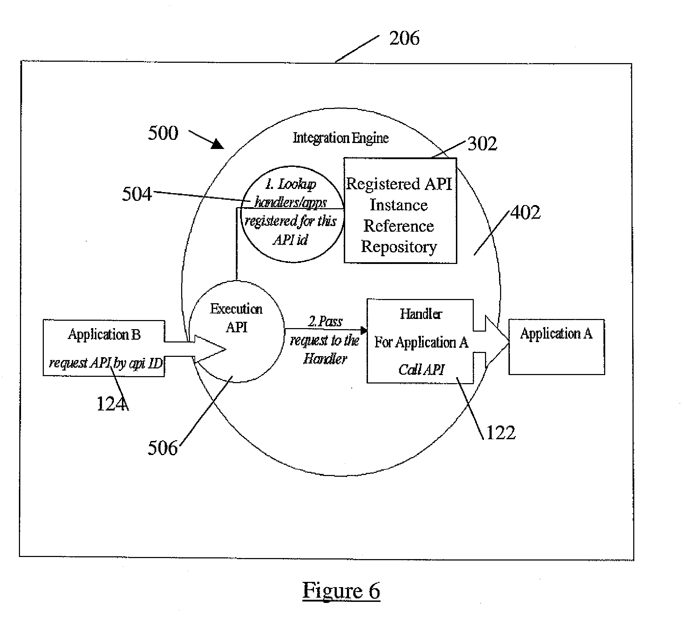

Referring to Figure 6, an example interaction, illustrating runtime logic flow of the integration engine 500, between applications A and B is shown. Application B requests to access the API 124 of application A via the execution interface 506. The execution interface 506 queries the Query And Registration Interface 504 to lookup handlers 122 and/or applications 107 registered with the requested API 124 via the table 302. The interface 504 retrieves the appropriate handler 122 for the requested application A by noting in the table 302 that the application A is not expressed in the platform neutral environment 402, hence the handler 122 is required for operation in the environment 402. The registered Handler 122 is then used by the integration engine 500 for facilitating access of the Application B to the Application A, via calling of the appropriate API 124 for the application A. It is recognized that the handler 122 and corresponding API 124 have previously been registered as instances of the application A through the interface 504.

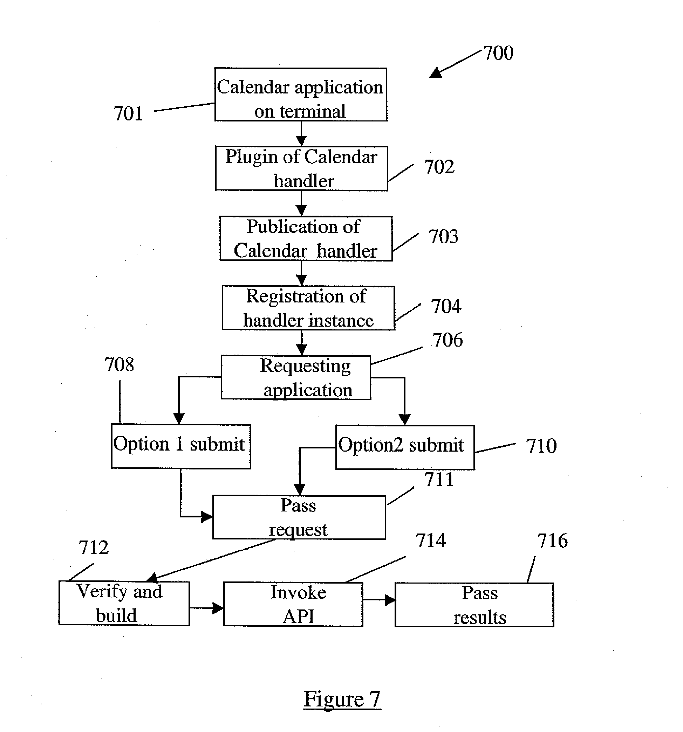

Referring to Figures 5 and 7, operation 700 of the integration engine 500 by adding a Handler to support application 107 interactions, API 124 registration steps, and steps executed upon the application 107 issuing the request for the API 124. It is noted that this example does not use the optional lookup search functionality. The Integration Engine 500 on the terminal 100 can support XML-based interaction protocol for use as the platform neutral environment 402, such as in the example below.

At step 701, a Calendar application 107 PersonalCalendar' is provisioned to the terminal 100 and doesn't have the built-in knowledge of the Integration Engine 500 interaction standard. At step 702, a Calendar Handler 122, designed to enable IE 500 standard access (represented by environment 402) for the Calendar application 107, is plugged in to the IE 500 through the extension interface 502 as an instance of 'PersonalCalendar' API(s). For example, the API Descriptor corresponding to the plugin handler 122 could be as follows: API 124 to update Calendar application 107 supports an operation 'addMeeting' to add a meeting. It is published in the table 302 with the following descriptor 'updateCalendarDesc.xml':

```
 <!DOCTYPE action SYSTEM "api-dtd">
 <action api="updateCalendar">
    <op name="addMeeting">
     <param>Meeting<param>
     <result type="boolean" />
  <lop>
  </action>
```

At step 703, the Calendar Handler 122 publishes through the interface 504 the API(s) 124 with an API-ID 'updateCalendar' as; *publishAPI("updateCalendar", "updateCalendarDesc.xml").* The Calendar handler 122 at step 704 then is registered through the interface 504 as "personalCalendarHandler" with the IE 500 as an instance of updateCalendar API 124 as follows: *registerAPIInstance("personalCalendarHandler"* , *"update Calendar").* It is recognized that the table 302 includes APIs 124 and handlers 122 that are registered as instances of the provisioned applications on the terminal 100. At step 706, a requesting application 400 (see Figure 4) builds the request info 'addMeetingRequest.xml' in order to add a meeting:

```
      <action api="//updateCalendar">
         <op name="addMeeting" >
            <param>
               <Meeting>
                  <date>09/15/03 10:15:00</date>
                  <details>Gonference call with John</details>
                  <note>To discuss the idea of XML based interface</note>
               </Meeting>
            </param>
            <result type="boolean" />
         </op>
      </action>
```

At step 708, Option 1 (directed access) provides for the Application 400 sending the following request to the Integration Engine 500: *submit["*/*local*/*personalCalendar Handler", "addMeetingRequest.xml"].* Otherwise, at step 710 Option 2 (broadcast) provides for the Application 400 sending the following request to the Integration Engine 500: *submit["addMeetingRequest.xml"].* At step 711, the IE 500 passes the request on to the Calendar Handler 122 (and to other registered 'updateCalendar' API 124 instances with option 2) as noted in the table 302. The Calendar Handler 122 verifies 712 the data (e.g. date) and builds the input in a format expected by the Calendar Application 107 (e.g. creates native Date object, constructs native Meeting object, etc.). The Calendar Handler 122 then invokes 714 Calendar application 107 native API 124 call. Upon completion, the Calendar Handler 122 passes 716 results (if appropriate) to the Integration Engine 500 for delivery to the requesting application 400.

It is recognized that similar steps, (without the handler 122) would be encountered above for API 124 registration and access without need of the handler 122 (i.e. the calendar application is expressed in the platform neutral environment 402 compatible language). Further, the access of the calendar handler in step 708 could be implemented remotely, if desired.

In view of the above system 10, utilization of the Publishing and Accessing of Application APIs 124 through the interface module 312 (or expressed as the engine 500) provides for generic and extensible inter-application 107 interactions and supports a dynamic environment for application 107 interaction. The applications 107 are enabled to interact in a platform neutral manner using such as but not limited to a structured language (e.g. XML) and/or platform neutral scripting (e.g. ECMAScript). The applications 107 can dynamically discover available APIs 124 and handlers 122 using the optional lookup interface 510, such as but not limited to using a keyword matching pattern. Further, the system 10 can provide the ability to dynamically extend the application 107 environment and set of provided API's 124 using dynamic plugin of Access Handlers 122 through the extension interface 502. It is further recognized that the interface module 312 could have similar interfaces 502, 504, 506, 508, 510 to that of the integration engine 500.

Further, the inter-application 107 communications are facilitated by the following constructs: Application Profiles of the table 300; Application API and handler Descriptors of the table 302 ; and Application API Interaction Interfaces involving registration, lookup, and access.

The above description relates to one exemplary systems and methods. Many variations will be apparent to those knowledgeable in the field, and such variations are within the scope of the application. For example, although XML and a subset of ECMAScript are used in the examples provided, other languages and language variants' may be used. Further, it is appreciated that the system 10 can be implemented as hardware and/or software components including: a data structure module for registering the access information of the target application, the access information including published access information; an interface module for providing the platform neutral environment, the interface module configured for receiving an access request from the requestor application; and an interface component module configured for containing an interface element retrievable by using the request content.

## Claims

1. A method for providing dynamic interaction between a pair of application programs by a platform neutral interface of a terminal, the pair of applications including a requestor application desiring access to a target application, the method comprising the steps of:
registering access information of the target application, the access information including published access information made available in a data structure for retrieval by the platform neutral interface;
receiving an access request by the platform neutral interface from the requestor application, the access request including request content corresponding to the published access information of the target application;
obtaining an interface component by using the request content to search the data structure, the interface component configured for enabling communication between the platform neutral interface and the target application in an access format expected by the target application; and
employing the interface component by the platform neutral interface to satisfy the access request of the requestor application for interaction with the target application.

2. The method according to claim 1, wherein the target application is selected from the group comprising: the target application configured for communication in a compatible language with the platform neutral interface; and the target application configured for communication in a incompatible language with the platform neutral interface.

3. The method according to claim 2, wherein the incompatible language is that used by a native runtime environment of the terminal.

4. The method according to claim 2, wherein the interface component is an application program interface (API) expressed in the compatible language.

5. The method according to claim 2, wherein the interface component is an extension element configured for providing mediation between the platform neutral interface and the target application expressed in the incompatible language.

6. The method according to claim 5 further comprising the step of registering the extension element with the platform neutral interface through an extension interface, the published access information of the extension element being added to the data structure.

7. The method according to claim 6 further comprising the step of accessing the target application through the platform neutral interface using the extension element to call a corresponding application program interface (API) expressed in the incompatible language of the target application.

8. The method according to claim 2 further comprising the step of employing a search algorithm with the request content for identifying matching ones of the interface component for use by the platform neutral interface.

9. The method according to claim 8, wherein the language used to express the platform neutral interface is selected from the group comprising; a structured definition language and a script.

10. The method according to claim 9, wherein the structured definition language is based on XML.

11. The method according to claim 9, wherein the language used to express the script is ECMAscript.

12. The method according to claim 2 further comprising the step of assembling the request content to include selected from the group comprising; a local location and a remote location.

13. The method according to claim 12, wherein the remote location is on another terminal coupled to said terminal through a network, the other terminal having one of the pair of applications for network interaction with the other of the pair of applications.

14. The method according to claim 13, wherein said terminal is configured as a client of a schema defined service accessible over the network.

15. The method according to claim 2, wherein the data structure is selected from the group comprising an application profile table and an application API descriptor table.

16. The method according to claim 15, wherein the application profile table includes application profiles of a plurality of target applications.

17. The method according to claim 15, wherein the application API descriptor table includes descriptors selected from the group comprising; API descriptors and extension element descriptors.

18. The method according to claim 15, wherein the data structure includes the access information selected from the group comprising; application URI, application version, application description, and a predefined set of matching API construct pairs,

19. The method according to claim 2 further comprising the step of providing an interface of the platform neutral interface selected from the group comprising; an extension interface, a query and registration interface, and an execution interface.

20. The method according to claim 19, wherein the extension interface is configured for dynamically extending a coupling of a new said interface component to the platform neutral interface.

21. A terminal for providing dynamic interaction between a pair of application programs in a platform neutral environment provided by the runtime environment of the terminal, the pair of applications including a requestor application desiring access to a target application, the terminal comprising:
a data structure for registering access information of the target application, the access information including published access information;
an interface module for providing the platform neutral environment, the interface module configured for receiving an access request from the requestor application, the access request configured to include request content corresponding to the published access information of the target application, the published access information of the data structure retrievable by the interface module; and
an interface component coupled to the interface module retrievable by using the request content to search the data structure, the interface component configured for enabling communication between the interface module and the target application in an access format expected by the target application;
wherein employing the interface component by the interface module satisfies the access request of the requestor application in interaction with the target application.

22. The terminal according to claim 21, wherein the target application is selected from the group comprising: the target application configured for communication in a compatible language with the interface module; and the target application configured for communication in a incompatible language with the interface module.

23. The terminal according to claim 22, wherein the incompatible language is that used by the native runtime environment of the terminal.

24. The terminal according to claim 22, wherein the interface component is an application program interface (API) expressed in the compatible language.

25. The terminal according to claim 22, wherein the interface component is an extension element configured for providing mediation between the interface module and the target application expressed in the incompatible language.

26. The terminal according to claim 25 further comprising an extension interface for registering the extension element with the interface module, the published access information of the extension element configured for adding to the data structure.

27. The terminal according to claim 26 further comprising a corresponding application program interface (API) callable by the extension element step for accessing the target application through the interface module, the application program interface (API) expressed in the incompatible language of the target application.

28. The terminal according to claim 22 further comprising a search algorithm for using the request content to identify matching ones of the interface component for use by the interface module.

29. The terminal according to claim 28, wherein the language used to express the interface module is selected from the group comprising; a structured definition language and a script.

30. The terminal according to claim 29, wherein the structured definition language is based on XML.

31. The terminal according to claim 29, wherein the language used to express the script is ECMAscript.

32. The terminal according to claim 22, wherein the request content is configured to include selected from the group comprising, a local location and a remote location.

33. The terminal according to claim 32, wherein the remote location is on another terminal coupled to said terminal through a network, the other terminal having one of the pair of applications for network interaction with the other of the pair of applications.

34. The terminal according to claim 33, wherein said terminal is configured as a client of a schema defined service accessible over the network.

35. The terminal according to claim 22, wherein the data structure is selected from the group comprising; an application profile table and an application API descriptor table.

36. The terminal according to claim 35, wherein the application profile table includes application profiles of a plurality of target applications.

37. The terminal according to claim 35, wherein the application API descriptor table includes descriptors selected from the group comprising; API descriptors and extension element descriptors.

38. The terminal according to claim 35, wherein the data structure includes the access information selected from the group comprising; application URI, application version, application description, and a predefined set of matching API construct pairs.

39. The terminal according to claim 22 further comprising an interface of the interface module selected from the group comprising; an extension interface, a query and registration interface, and an execution interface.

40. The terminal according to claim 39, wherein the extension interface is configured for dynamically extending a coupling of a new said interface component to the interface module.

41. The terminal according to claim 39, wherein the query and registration interface is configured for publishing the access information related to the interface component.

42. A computer program product for providing dynamic interaction between a pair of application programs in a platform neutral environment provided by a runtime environment of a terminal, the pair of applications including a requestor application desiring access to a target application, the computer program product comprising:
a computer readable medium;
a data structure module stored on the computer readable medium for registering access information of the target application, the access information including published access information;
an interface module coupled to the data structure module for providing the platform neutral environment, the interface module configured for receiving an access request from the requestor application, the access request configured to include request content corresponding to the published access information of the target application, the published access information of the data structure module retrievable by the interface module; and
an interface component module coupled to the interface module, the interface module configured for containing an interface element retrievable by using the request content to search the data structure module, the interface component configured for enabling communication between the interface module and the target application in an access format expected by the target application;
wherein employing the interface component by the interface module satisfies the access request of the requestor application in interaction with the target application.
